# DEMANDE DE BREVET EUROPEEN

(11) **EP 0 581 692 A1**
(43) Date de publication de la demande: **02.02.1994**
(21) Numéro de dépôt: 93420273.0
(22) Date de dépôt: 24.06.1993
(51) Int. Cl.: B62J 7/02

(54) **Dispositif de réglage en position de plateforme porte-bagages avant ou arrière de bicyclettes**

(30) Priorité: 29.07.1992 FR 9209728
(71) Demandeur: Fiol, James, F-42140 Chazelles-sur-Lyon (FR)
(72) Inventeur: Fiol, James, F-42140 Chazelles-sur-Lyon (FR)
(74) Mandataire: Dupuis, François

(57) **Abrégé**

La plateforme (1) comprend une structure en fil, et est associée par ses extrémités avant (1.1) avec un dispositif de liaison (5) autorisant sa fixation avec ajustement angulaire réglable par rapport au tube de selle (6) ou sous la selle de bicyclette. Ce dispositif comprend deux bras (7) profilés, selon une configuration globale en forme de fourche, comprenant à leur extrémité avant (7.1) en regard de la plateforme (1), des moyens permettant leur articulation réglable et liaison sur celle-ci, et à leur extrémité arrière (7.2) des moyens permettant leur fixation sur le tube de selle ou sous la selle, et en ce qu'une pièce de liaison (8) intermédiaire solidarisée auxdits bras (7) et à la plateforme (1) permet l'indexation angulaire desdits bras en position confortant la fixation de l'ensemble.

## Description

L'invention se rattache au secteur technique des bicyclettes et leurs accessoires et équipements et notamment les porte-bagages pouvant être disposés soit derrière la selle, soit devant le guidon.

De nombreuses bicyclettes pour la promenade et la randonnée sont équipées de porte-bagages. De manière connue, ces derniers comprennent une plateforme d'appui support, dont une extrémité est associée et fixée à l'arrière du tube de selle, tandis que des bras porteurs sont fixés par leurs extrémités au moyeu arrière ou axe de roue, et ou au moyeu avant de la bicyclette ou axe de roue. Cette plateforme peut être réalisée en fil, en un matériau garantissant une solidité pour la réception de la charge.

Jusqu'à ce jour, la conception des bicyclettes relevait de certains paramètres standard et en particulier par les diamètres de roues et dimensions et formes de cadre.

Avec l'évolution des vélos tous terrains, dénommés dans leur langage générique, sous la dénomination V.T.T., il apparaît que cette standardisation est bien moins respectée et l'on voit apparaître sur le marché des bicyclettes ayant des caractéristiques très variées et notamment au niveau des formes et des dimensions de cadre. Il se pose donc un problème aux équipementiers d'assurer des fabrications d'accessoires et composants qui puissent être facilement adaptables à tous types de bicyclettes et V.T.T. en général, sans être obligés de fabriquer des gammes d'un même produit, avec des différences de dimensions minimes ou faibles pour tenir compte des variations des produits proposés.

Ainsi, dans le cadre des plateformes porte-bagages avant ou arrière, pouvant se fixer sur un vélo tous terrains, ou bicyclettes en général, le but recherché était de concevoir un nouveau dispositif qui permette une fixation porte-bagages, de fabrication standardisée, quelles que soient les caractéristiques des diamètres de roues, formes et dimensions de cadres et hauteurs notamment.

Un autre but recherché selon l'invention était de concevoir un dispositif qui offre, par des réglages rapides et faciles à mettre en oeuvre, un montage desdits porte-bagages, fiable, sécurisant et de bonne tenue.

Un autre but recherché selon l'invention était de concevoir un dispositif qui permette une adaptation rapide d'un même porte-bagages, sur différents types de vélo tous terrains ou bicyclettes de caractéristiques variées.

Ces buts et d'autres encore ressortiront bien de la suite de la description.

Selon une première caractéristique de l'invention, le dispositif de réglage en position de la plateforme porte-bagages avant ou arrière de bicyclette, ladite plateforme comprenant une structure en fil, caractérisé en ce que ladite plateforme est associée par ses extrémités avant avec un dispositif de liaison autorisant sa fixation avec ajustements angulaires réglables par rapport au tube de selle ou sous la selle de la bicyclette.

Selon une autre caractéristique, le dispositif comprend deux bras profilés, selon une configuration globale en forme de fourche, comprenant à leur extrémité avant, en regard de la plateforme, des moyens permettant leur articulation réglable et liaison sur celle-ci, et à leur extrémité arrière, des moyens permettant leur fixation sur le tube de selle ou sous la selle, et en ce que une pièce de liaison intermédiaire solidarisée aux dits bras et à la plateforme permet l'indexation angulaire desdits bras en position en confortant la fixation de l'ensemble.

Pour fixer l'objet de l'invention illustré d'une manière non limitative aux figures des dessins où :
- la figure 1 est une vue en perspective éclatée avant montage des différents moyens du dispositif, permettant un réglage en position de la plateforme porte-bagages, par rapport à des hauteurs de cadre différentes.
- la figure 2 est une vue de côté illustrant le montage du dispositif selon l'invention sur un cadre de vélo avec illustration en traits pointillés d'une adaptation par rapport à un cadre de formes et dimensions différentes,

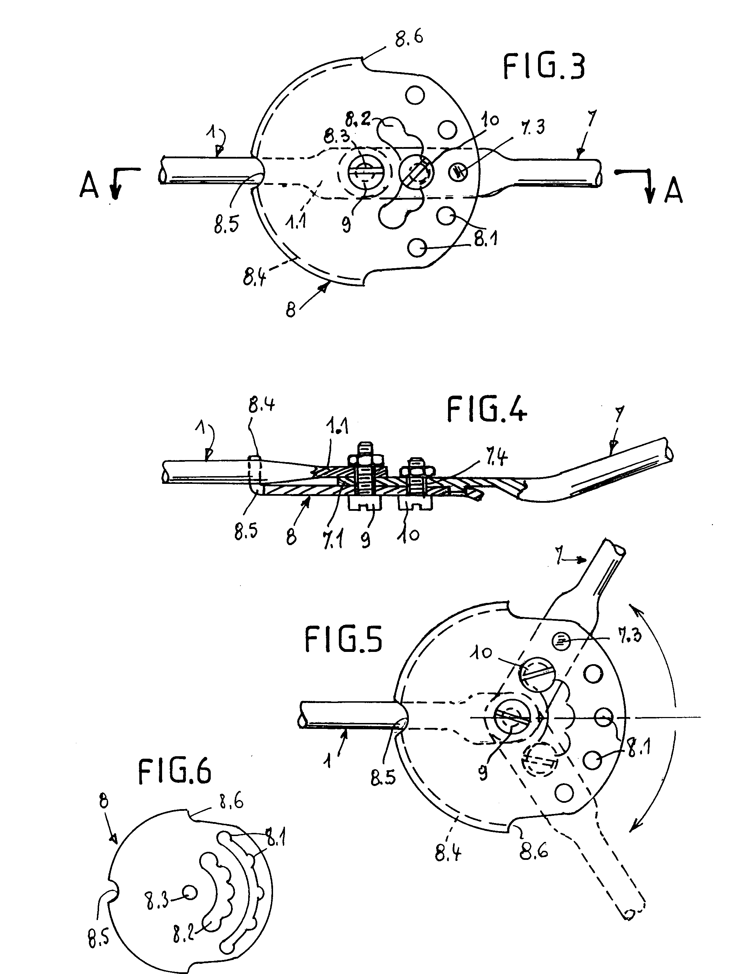

- la figure 3 est une vue partielle à grande échelle illustrant le dispositif selon l'invention dans une position de réglage à l'horizontal,
- la figure 4 est une vue en coupe selon la ligne A.A de la figure 3,
- la figure 5 est une vue selon la figure 3 illustrant des positions possibles du dispositif selon l'invention,
- la figure 6 est une vue partielle d'un moyen de blocage en position du dispositif.

Afin de rendre plus concret l'objet de l'invention, on le décrit maintenant d'une manière non limitative illustrée aux figures des dessins.

La plateforme porte-bagages est référencée dans son ensemble par (1) et est réalisée de manière connue non limitativement à partir d'une structure en fil métallique ou similaire définissant une large dimension pour l'apposition de bagages ou autres. Dans sa partie arrière, cette plateforme reçoit des bras (2) fixés à leur partie supérieure (2.1) à un étrier d'ancrage (3) par boulonnage (4) ou similaire et à leur partie inférieure (2.2) sur l'axe de roue.

Selon l'invention, cette plateforme est associée dans sa partie avant avec un dispositif de liaison référencé dans son ensemble par (5), autorisant sa fixation avec ajustement réglable par rapport au tube de selle (6), comprenant à cet effet un collier (6.1), ou directement sous la selle. Ce dispositif comprend ainsi deux bras (7) profilés selon une configuration globale en forme de fourche, comprenant à leur extrémité avant (7.1), en regard de la plateforme (2), des moyens permettant leur articulation et liaison sur celle-ci, et à leur extrémité arrière (7.2), des moyens permettant leur fixation sur le tube de selle ou sous la selle. En outre, il est prévu une pièce de liaison (8), susceptible d'être disposée et montée sur l'axe de fixation (9) des extrémités de la plateforme et des bras, pour assurer une liaison fixe. Cette pièce de liaison, en forme de disque, est agencée avec des échancrures curvilignes (8.1) successives, définissant un secteur angulaire de grande amplitude, ces échancrures permettant le positionnement et centrage de plots (7.3) formés près de l'extrémité (7.1) de chacun des bras (7). Le positionnement de chaque plot (7.3) dans l'une des échancrures (8.1) précitées permet ainsi de donner l'orientation de positionnement angulaire des bras (7) par rapport à la plateforme (1). Lesdites échancrures peuvent être indépendantes les unes des autres, comme illustrées au dessin, ou être conformées à partir d'une lumière curviligne présentant une pluralité d'évidements successifs pour le positionnement et l'indexation desdits plots. Ladite plaque de liaison (8) comprend une ouverture axiale (8.3) autorisant le passage de l'axe de fixation (9).

Compte tenu des contraintes d'utilisation des bicyclettes, et des efforts transmis, il peut être nécessaire de prévoir des moyens complémentaires (10) de serrage et de fixation des bras (7) sur la plaque de liaison (8) précitée. A cet effet, et dans un mode de réalisation non limitatif, chaque pièce de liaison (8) est agencée en plus avec une lumière curviligne (8.2) concentrique par l'intérieur ou par l'extérieur à la zone de position des échancrures (8.1) en permettant ainsi l'insertion des moyens complémentaires (10) de liaison du type vis-écrous, engagés également dans une ouverture complémentaire (7.4) formée sur les bras. Ces ouvertures (7.4) peuvent être ainsi disposées entre les ouvertures (7.1) autorisant l'insertion de l'axe de liaison (9) de la pièce de liaison (8), du bras (7) et de l'extrémité (1.1) de la plateforme d'une part, et d'autre part, le plot de centrage (7.3) prévu sur le bras. Ce verrouillage complémentaire garantit une plus grande solidité du dispositif ainsi décrit.

En outre, la pièce de liaison (8) présente avantageusement sur sa partie arrière un rabat intérieur (8.4) présentant une échancrure (8.5) à l'endroit de passage de l'extrémité (1.1) de la plateforme (1). La pièce de liaison est ainsi parfaitement centrée et maintenue par rapport à la plateforme et les bras, en assurant éventuellement la protection des moyens de liaison.

Sans sortir du cadre de l'invention, on pourrait concevoir que les bras (7) ont une légère capacité de flexibilité, par rapport à la pièce de liaison (8), pour permettre leur indexage angulaire varié en position par rapport à la plateforme. Cette flexibilité permet de dégager les plots (7.3) des échancrures (8.1) en autorisant, après déplacement angulaire, leur mise en place dans l'échancrure choisie et leur retenue.

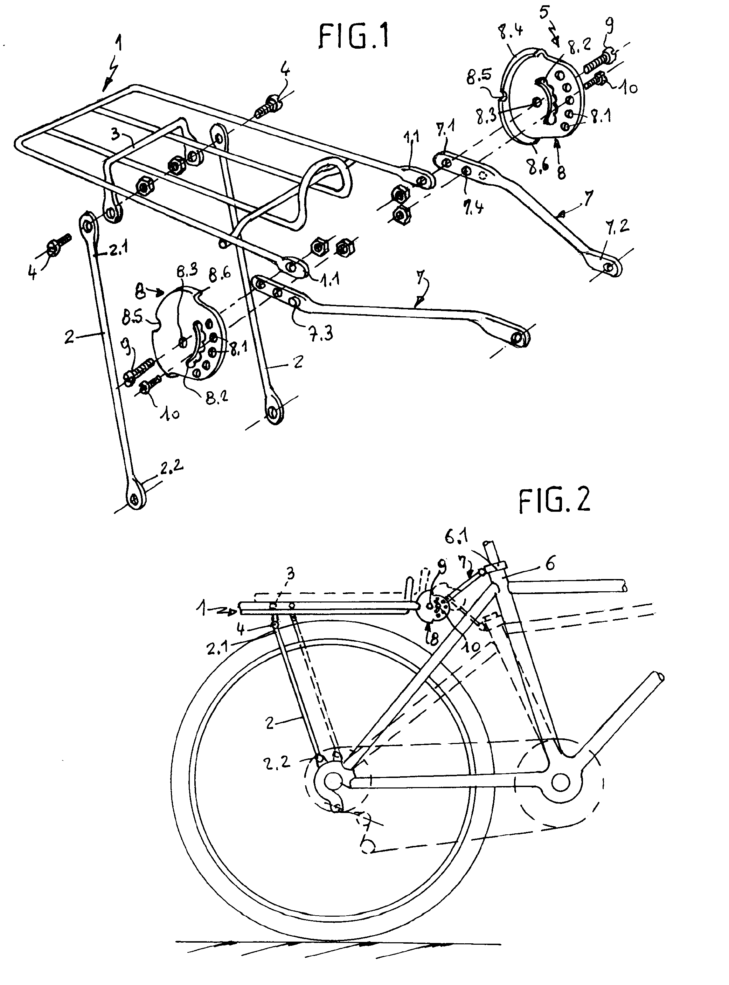

Ce dispositif ainsi décrit est simple à réaliser, d'une mise en place aisée. On a représenté à la figure 2 des dessins, le dispositif selon l'invention permettant la fixation de la plateforme à deux cadres de bicyclettes, dont un en traits pointillés, de formes et dimensions différentes. La plateforme reste dans un plan horizontal et les bras (7) sont orientés angulaire- ment pour permettre leur liaison à leur extrémité libre sur le tube de selle. Cette liaison peut être également assurée par rapport à la selle. La pièce de liaison (8) peut être réalisée en matière plastique ou en matière métallique, en étant emboutie. La forme de cette pièce n'est pas limitée à un profil extérieur en disque, elle peut présenter une forme ovalisée ou autre. Il y a lieu d'observer également que la partie en forme de rabat (8.4) tournée vers l'intérieur de la pièce de liaison peut constituer également par ses extrémités (8.6) des plans de butée à l'articulation maximum des bras (7) précités. Tous moyens de liaison à fixation rapide peuvent être utilisés pour assurer la sol idarisation des bras (7) sur la plateforme (1) par rapport à la pièce de liaison (8).

Le dispositif selon l'invention peut s'adapter aussi bien pour les plateformes porte-bagages arrière et avant s'adaptant sur bicyclettes. Les avantages ressortent bien de l'invention. On souligne la simplicité du dispositif et sa capacité d'adaptation sur une très large gamme de bicyclettes ayant des cadres de formes et dimensions différentes, et roues de diamètre variable.

## Revendications

1 - Dispositif de réglage en position de la plateforme porte-bagages avant ou arrière de bicyclette, ladite plateforme (1) comprenant une structure en fil, associée par ses extrémités avant (1.1) avec un dispositif de liaison (5) autorisant sa fixation avec ajustement angulaire réglable par rapport au tube de selle (6) ou sous la selle de la bicyclette,
caractérisé en ce qu'il comprend deux bras (7) profilés, selon une configuration globale en forme de fourche, comprenant à leur extrémité avant (7.1), en regard de la plateforme (1 des moyens permettant leur articulation réglable et liaison sur celle-ci, et à leur extrémité arrière (7.2), des moyens permettant leurfixa- tion sur le tube de selle ou sous la selle,
eten ce que une pièce de liaison (8) intermédiaire, solidarisée auxdits bras (7) et à la plateforme (1), permet l'indexation angulaire desdits bras en position en confortant la fixation de l'ensemble,
et en ce que lesdits bras présentent, près de leur extrémité (7.1), des plots de centrage (7.3) susceptibles de coopérer avec des échancrures (8.1) disposées et régulièrement réparties selon un secteur angulaire de grande amplitude, formé sur la pièce de liaison (8), le positionnement des plots dans l'une des échancrures (8.1) permettant de définir l'orientation de positionnement angulaire des bras (7) par rapport à la plateforme (1),
et en ce que les bras ont une capacité de flexibilité par rapport à la pièce de liaison (8) permettant de dégager les plots (7.3) des échancrures (8.1) en autorisant après déplacement angulaire leur mise en place dans l'échancrure choisie et leur retenue.

2 - Dispositif selon la revendication 1, caractérisé en ce que les échancrures (8.1) sont indépendantes les unes des autres ou conformées à partir d'une lumière curviligne présentant une pluralité d'évidements successifs pour le positionnement et l'indexation.

3 - Dispositif selon la revendication 1, caractérisé en ce que les moyens complémentaires (10) assurent le serrage et la liaison des bras (7) sur la plaque de liaison.

4 - Dispositif selon l'une quelconque des revendications 1 et 3, caractérisé en ce que la pièce de liaison (8) comprend une lumière curviligne (8.2) concentrique à la zone de position des échancrures (8.1) autorisant l'insertion des moyens complémentaires (10) du type vis-écrous, lesquels sont engagés également dans une ouverture complémentaire (7.4) formée sur les bras.

5 - Dispositif selon la revendication 1, caractérisé en ce que la pièce de liaison (8) associée à chaque bras (7) comprend une ouverture axiale (8.3) autorisant le passage d'un axe de fixation (9) traversant également une ouverture (7.4) formée sur chaque bras (7).

6 - Dispositif selon la revendication 1, caractérisé en ce que la pièce de liaison (8) présente sur sa partie arrière un rabat intérieur (8.4) présentant une échancrure (8.5) à l'endroit de passage de l'extrémité (1.1) de la plateforme, ladite pièce de liaison étant ainsi centrée et maintenue par rapport à la plateforme et les bras.

7 - Dispositif selon la revendication 6, caractérisé en ce que la partie en forme de rabat (8.4) de la pièce de liaison constitue par ses extrémités (8.6) des plans de butée à l'articulation maximum des bras (7).
